# EUROPÄISCHE PATENTSCHRIFT

(11) **EP 4 193 044 B1**
(45) Veröffentlichungstag und Bekanntmachung des Hinweises auf die Patenterteilung: **26.02.2025**
(21) Anmeldenummer: 21748563.0
(22) Anmeldetag: 21.07.2021
(51) Int. Cl.: F01N 3/32, F01N 3/20, F02B 37/04, F02B 39/10, F02D 41/00, F02M 26/02

(54) **VERBRENNUNGSKRAFTMASCHINE FÜR EIN KRAFTFAHRZEUG SOWIE KRAFTFAHRZEUG**
INTERNAL COMBUSTION ENGINE FOR A MOTOR VEHICLE, AND MOTOR VEHICLE
MOTEUR À COMBUSTION INTERNE POUR VÉHICULE AUTOMOBILE, ET VÉHICULE AUTOMOBILE

(30) Priorität: 05.08.2020 DE 102020004717
(43) Veröffentlichungstag der Anmeldung: 14.06.2023
(73) Patentinhaber: Mercedes-Benz Group AG, 70372 Stuttgart (DE)
(72) Erfinder: BEIL, Heiko, 70193 Stuttgart (DE); ERNST, Rene, 76774 Leimersheim (DE); MUELLER, Siegfried, 74379 Ingersheim (DE); HEINRICHSMEYER, Michael, 71711 Steinheim (DE)
(74) Vertreter: Novagraaf Group
(86) Internationale Anmeldenummer: PCT/EP2021/070312
(87) Internationale Veröffentlichungsnummer: WO 2022/028885

(56) Entgegenhaltungen:
- WO-A1-2019/033134
- DE-A1- 102013 001 080
- DE-A1- 102017 213 004
- DE-A1- 102018 117 913
- DE-B4- 102013 001 080
- US-A1- 2020 165 949

## Beschreibung

Die Erfindung betrifft eine Verbrennungskraftmaschine für ein Kraftfahrzeug gemäß dem Oberbegriff von Patentanspruch 1. Des Weiteren betrifft die Erfindung ein Kraftfahrzeug.

Die DE 10 2017 213 004 A1 offenbart eine Brennkraftmaschine mit einem Verbrennungsmototor, einem Frischgasstrang zum Zuführen von Frischgas zu dem Verbrennungsmotor, einen Abgasstrang zum Abführen von Abgas von dem Verbrennungsmotor und mindestens einer in den Abgasstrang integrierten Abgasnachbehandlungsvorrichtung. Die Brennkraftmaschine umfasst des Weiteren einen in den Frischgasstrang oder den Abgasstrang integrierten, elektrisch antreibbaren Verdichter und eine der Abgasnachbehandlungsvorrichtung vorgeschaltete oder darin integrierte Heizvorrichtung zur Beheizung eines durch diese durchströmenden Gases auf. Die Brennkraftmaschine weist eine Steuerungsvorrichtung auf, die derart ausgebildet ist, dass diese in einem Nichtbetrieb des Verbrennungsmotors bedarfsweise den Verdichter zeitgleich mit der Heizvorrichtung betreibt, wenn die Temperatur einer Komponente der Brennkraftmaschine unterhalb eines definierten Grenzwerts liegt.

Des Weiteren offenbart die DE 10 2018 129 955 A1 ein Verfahren zum Vorkonditionieren einer Abgasanlage zur Abführung und Reinigung von Verbrennungsabgasen eines Verbrennungsmotors, insbesondere eines Verbrennungsmotors eines Kraftfahrzeugs, wobei in der Abgasanlage von einem Heizelement Luft erhitzt wird. Von einem Gebläse wird in der Abgasanlage mit der erhitzten Luft ein Heißluftstrom erzeugt, wobei ein erster Katalysator der Abgasanlage von dem Heißluftstrom auf eine minimale Betriebstemperatur erwärmt wird.

Zudem ist aus der DE 10 2013 001 080 A1 ein Verfahren zum Betreiben einer Antriebseinrichtung mit einer Brennkraftmaschine und mit einer an die Brennkraftmaschine angeschlossenen Abgasanlage, die wenigstens einen Katalysator aufweist, als bekannt zu entnehmen. Dem Katalysator wird zum Aufheizen in wenigstens einem Betriebszustand der Brennkraftmaschine ein mittels einer Heizeinrichtung erwärmter Warmluftstrom zugeführt wird, wobei der Warmluftstrom stromaufwärts des Katalysators zum Einstellen einer bestimmten Temperatur mit einen Kaltfrischluftstrom vermengt wird.

Aufgabe der vorliegenden Erfindung ist es, eine Verbrennungskraftmaschine und ein Kraftfahrzeug zu schaffen, sodass ein Aufheizen einer Abgasnachbehandlungseinrichtung besonders vorteilhaft und besonders schnell erfolgen kann.

Diese Aufgabe wird erfindungsgemäß durch eine Verbrennungskraftmaschine mit den Merkmalen des Patentanspruchs 1 sowie durch ein Kraftfahrzeug mit den Merkmalen des Patentanspruchs 8 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Verbrennungskraftmaschine für ein Kraftfahrzeug, das über eine Abtriebswelle der Verbrennungskraftmaschine von der Verbrennungskraftmaschine antreibbar ist. Die Verbrennungskraftmaschine weist wenigstens einen Brennraum und einen von Luft durchströmbaren Ansaugtrakt auf, wobei über den Ansaugtrakt dem Brennraum Luft zugeführt werden kann. Des Weiteren umfasst die Verbrennungskraftmaschine einen von einem Abgas aus dem Brennraum durchströmbaren Abgastrakt, wobei in dem Abgastrakt eine Abgasnachbehandlungseinrichtung zum Nachbehandeln des Abgases angeordnet ist.

Zudem ist in dem Abgastrakt stromauf der Abgasnachbehandlungseinrichtung wenigstens ein Heizelement zum Erhitzen eines den Abgastrakt durchströmenden Gases angeordnet. Die Verbrennungskraftmaschine umfasst einen elektrisch unterstützten Abgasturbolader, welcher ein in dem Ansaugtrakt angeordnetes Verdichterrad als erstes Laufrad zum Verdichten der den Ansaugtrakt durchströmenden Luft aufweist. Der elektrisch unterstützte Abgasturbolader weist zudem ein in dem Abgastrakt angeordnetes und von dem Abgas antreibbares Turbinenrad als zweites Laufrad sowie eine elektrische Maschine auf. Mittels der elektrischen Maschine kann in einem Heizbetrieb zum Aufheizen der Abgasnachbehandlungseinrichtung zumindest eines der beiden Laufräder angetrieben werden, wodurch in dem Heizbetrieb, während welchem Verbrennungsvorgänge in dem Brennraum unterbleiben und die Abtriebswelle stillsteht, mittels des zumindest einen Laufrads in den Abgastrakt Luft als Heizmedium gefördert werden kann. Das Heizmedium kann in dem Heizbetrieb zum Aufheizen der Abgasnachbehandlungseinrichtung mittels dem Heizelement erwärmt werden. Somit ist beispielsweise das Heizmedium das oder ein Gas, welches mittels des Heizelements erhitzt bzw. erwärmt werden kann.

Um nun die Abgasnachbehandlungseinrichtung besonders vorteilhaft und besonders schnell aufheizen zu können, weist die Verbrennungskraftmaschine erfindungsgemäß wenigstens ein Leitungselement auf, welches an einer stromab der Abgasnachbehandlungseinrichtung angeordneten ersten Verbindungsstelle und an einer stromauf des Heizelements angeordneten zweiten Verbindungsstelle fluidisch mit dem Abgastrakt verbunden ist. Mittels des Leitungselements kann zumindest ein Teil des Heizmediums an der ersten Verbindungsstelle aus dem Abgastrakt abgezweigt, in das Leitungselement eingeleitet, von der ersten Verbindungsstelle zu der zweiten Verbindungsstelle rückgeführt und an der zweiten Verbindungsstelle wieder in den Abgastrakt eingeleitet werden. Zudem weist die Verbrennungskraftmaschine einen Ventiltrieb auf, welcher wenigstens ein dem Brennraum zugeordnetes Einlassventil und wenigstens ein dem Brennraum zugeordnetes Auslassventil aufweist. Das Einlassventil und das Auslassventil werden zusammenfassend auch als Gaswechselventile bezeichnet. In dem Heizbetrieb sind das Einlassventil und das Auslassventil gleichzeitig geöffnet, wodurch in dem Heizbetrieb das Heizmedium von dem Ansaugtrakt durch den Brennraum hindurch und somit über die Gaswechselventile in den Abgastrakt führbar ist. Mit anderen Worten, da die Gaswechselventile gleichzeitig geöffnet sind, gibt das Einlassventil einen Einlasskanal frei, während gleichzeitig das Auslassventil einen Auslasskanal der Verbrennungskraftmaschine freigibt. Das Heizmedium kann nun den Einlasskanal durchströmen und dadurch über den Einlasskanal und das Einlassventil aus dem Ansaugtrakt in den Brennraum einströmen und daraufhin den Brennraum durchströmen und dann den Auslasskanal durchströmen und dadurch über den Auslasskanal und das Auslassventil in den Abgastrakt einströmen, wodurch das Abgas von dem Ansaugtrakt durch den Brennraum hindurch über die Gaswechselventile in den Abgastrakt führbar ist bzw. geführt wird.

Das Kraftfahrzeug ist vorzugsweise als Kraftwagen, insbesondere als Personenkraftwagen, ausgebildet. Die Verbrennungskraftmaschine kann als eine Hubkolbenmaschine ausgebildet sein und einen Motorblock aufweisen, welcher den Brennraum umfasst. Über den Ansaugtrakt strömt ein Fluid, typischerweise die Luft, in den Brennraum. In einem befeuerten Betrieb laufen in dem Brennraum Verbrennungsvorgänge ab. Bei dem jeweiligen Verbrennungsvorgang wird ein Kraftstoff-Luft-Gemisch verbrannt, wodurch das Abgas der Verbrennungskraftmaschine entsteht. Das Kraftstoff-Luft-Gemisch umfasst die zuvor genannte, den Ansaugtrakt durchströmende Luft und einen insbesondere flüssigen Kraftstoff, welcher in den Brennraum eingebracht, insbesondere direkt eingespritzt, wird.

Im Abgastrakt, der insbesondere auch als Abgasanlage bezeichnet werden kann, ist die Abgasnachbehandlungseinrichtung zum Nachbehandeln des Abgases angeordnet. Mit anderen Worten ausgedrückt dient die Abgasnachbehandlungseinrichtung einer Abgasreinigung mittels insbesondere wenigstens eines Katalysators und/oder wenigstens eines Filters wie beispielsweise eines Partikelfilters. Mittels des Katalysators werden im Abgas vorliegende Schadstoffe, wie beispielsweise Kohlenstoffmonoxid, Stickstoffmonoxid, Stickstoffdioxid und/oder unverbrannte Kohlenwasserstoffe, mittels wenigstens einer chemischen Reaktion in unschädliche Stoffe umgewandelt. Der Katalysator kann somit als ein Drei-Wege-Katalysator ausgebildet sein. Unter dem Katalysator wird insbesondere eine Komponente verstanden, die eine Aktivierungsenergie der chemischen Reaktion besonders absenkt, wodurch eine Reaktionsgeschwindigkeit der chemischen Reaktion besonders schnell abläuft. Die Aktivierungsenergie ist insbesondere eine zum Start der chemischen Reaktion erforderliche Energiemenge. Die Reaktionsgeschwindigkeit ist insbesondere eine Geschwindigkeit, mit welcher die chemische Reaktion abläuft. Als Filter wird insbesondere eine Komponente bezeichnet, die Feststoffe aus einem Gasstrom oder Flüssigkeitsstrom zurückhält. Dadurch können insbesondere als Partikel oder als Ruß bezeichnete Fest- bzw. Schadstoffe aus dem Abgas gefiltert werden.

Um eine besonders gute Reinigung des Abgases der Verbrennungskraftmaschine zu ermöglichen, ist es vorteilhaft, dass die Abgasnachbehandlungseinrichtung, insbesondere der Katalysator, eine Mindesttemperatur aufweist, die insbesondere als eine Konvertierungstemperatur oder Light-Off-Temperatur oder Anspringtemperatur bezeichnet werden kann. Hierfür ist insbesondere bei einem Kaltstart ein Aufheizen der Abgasnachbehandlungseinrichtung erforderlich. Als Kaltstart wird insbesondere eine Inbetriebnahme, ein Start, ein Anlassen oder eine Aktivierung der Verbrennungskraftmaschine verstanden, bei der eine Temperatur der Verbrennungskraftmaschine in etwa der Umgebungstemperatur entspricht. Beim Start der Verbrennungskraftmaschine wird die Verbrennungskraftmaschine von einem Zustand, in dem Verbrennungsvorgänge im Brennraum unterbleiben und die Abtriebswelle stillsteht, was auch als stehender Motor bezeichnet wird, in einen aktivierten Zustand gebracht, der insbesondere als befeuerter Betrieb bezeichnet wird. Nach dem Kaltstart wird die Abgasnachbehandlungseinrichtung mittels des Abgases aufgeheizt. Insbesondere bei Fahrzeugen mit einer Kombination aus einem Verbrennungsmotor und elektrischem Fahren wird das Aufheizen bzw. ein Warmhalten des Abgastrakts durch das Abgas besonders schwierig, da ein Massenstrom des Abgases in manchen Betriebszuständen sehr gering oder nicht vorhanden sein kann. Als elektrisches Fahren wird insbesondere eine elektrische Fahrt des Kraftfahrzeugs bezeichnet, wobei bei der elektrischen Fahrt das Kraftfahrzeug wenigstens teilweise von einer elektrischen Maschine angetrieben wird.

Das in dem Abgasstrakt stromauf der Abgasnachbehandlungseinrichtung angeordnete Heizelement kann das Aufheizen der Abgasnachbehandlungseinrichtung, insbesondere nach einem Kaltstart besonders beschleunigen. Das Heizelement ist derart ausgebildet, dass es das durch oder um das Heizelement strömende Gas wie beispielsweise das Abgas aufheizt. Bei dem Gas handelt es sich in einem Normalbetrieb und/oder während des Kaltstarts der Verbrennungskraftmaschine um das Abgas. In dem Heizbetrieb der Verbrennungskraftmaschine, der verschieden zum Normalbetrieb ist, ist das Gas die Luft, welche mittels des Heizelements erwärmt wird und als Heizmedium zum Erwärmen bzw. Aufheizen der Abgasnachbehandlungseinrichtung genutzt wird.

Um ein besonders vorteilhaftes und schnelles Aufheizen der Abgasnachbehandlungseinrichtung zu ermöglichen, sind das erfindungsgemäße Leitungselement und der erfindungsgemäße Ventiltrieb, der insbesondere als ein variabler oder als ein vollvariabler Ventiltrieb ausgebildet sein kann, vorgesehen. Unter einem variablen oder vollvariablen Ventiltrieb wird ein Ventiltrieb verstanden, bei dem ein Ventilhub oder eine Öffnungsdauer, insbesondere ein Öffnungszeitpunkt und/oder ein Schließzeitpunkt, des Einlassventils und/oder des Auslassventils variabel einstellbar bzw. veränderbar ist. Dies kann insbesondere in dem oder während des Normalbetriebs und/oder in dem oder während des Heizbetriebs erfolgen. Im Heizbetrieb sind das Einlassventil und das Auslassventil gleichzeitig zumindest teilweise geöffnet, wodurch das Heizmedium beispielsweise mittels des elektrischen oder elektrisch unterstütztenAbgasturboladers vom Ansaugtrakt durch den Brennraum hindurch in den Abgastrakt zum Heizelement gefördert werden kann und/oder das Heizmedium kann in dem Abgastrakt gefördert werden und dabei, insbesondere über das Leitungselement, zirkulieren. Hierbei wird wenigstens eines der beiden Laufräder mittels der elektrischen Maschine unter Nutzung von elektrischer Energie angetrieben, die insbesondere aus einer als Bordnetz bezeichneten Stromversorgungseinrichtung entnommen werden kann. Mittels des Leitungselements kann wenigstens ein Teil des durch das Heizelement aufgeheizten Heizmediums nach einem Durchströmen der Abgasnachbehandlungseinrichtung erneut zum Heizelement und der Abgasnachbehandlungseinrichtung rückgeführt werden, wodurch ein Rezirkulationskreislauf entsteht. Auf diese Weise wird nicht nur die Abgasnachbehandlungseinrichtung beheizt, sondern auch weitere Teile des Abgastraktes. Dadurch liegt zwischen der Abgasnachbehandlungseinrichtung und ihren umgebenden Bauteilen des Abgastraktes ein besonders geringer Temperaturgradient vor, wodurch von der Abgasnachbehandlungseinrichtung besonders wenig Wärme zu den umliegenden Bauteilen des Abgastrakts abtransportiert wird. Mit anderen Worten ausgedrückt ist ein Wärmeverlust der Abgasnachbehandlungseinrichtung besonders gering. Dadurch kann das Aufheizen und Warmhalten der Abgasnachbehandlungseinrichtung besonders effizient gestaltet werden. Außerdem kann das Heizmedium in kurzer Zeit auf eine besonders hohe Temperatur gebracht werden, wodurch die Abgasnachbehandlungseinrichtung effizient und effektiv erwärmt werden kann. Der Rezirkulationskreislauf kann insbesondere bei stehendem Motor betrieben werden. Eine Förderung des Heizmediums in dem Rezirkulationskreislauf kann insbesondere mittels des elektrisch angetriebenen, wenigstens einen Laufrads, insbesondere mittels des zweiten Laufrads, erfolgen oder zumindest unterstützt werden. Mit anderen Worten ausgedrückt kann der Rezirkulationskreislauf mittels des elektrisch angetriebenen, wenigstens einen Laufrads aufrechterhalten werden. Es wird demnach eine Konditionierung der Abgasnachbehandlungseinrichtung ermöglicht, insbesondere bei stehendem Motor. Dadurch werden von der Verbrennungskraftmaschine besonders wenig Schadstoffe ausgestoßen, insbesondere nach einem Kaltstart.

Bei einer Ausführungsform der Erfindung ist in dem Leitungselement ein Ventilelement angeordnet, mittels welchem eine das Leitungselement durchströmende Menge des Heizmediums einstellbar ist. Hierfür kann das Ventilelement mit einer Regeleinrichtung verbunden sein, die beispielsweise von einem Steuergerät dargestellt wird oder auch als Steuergerät bezeichnet wird. Das Leitungselement ist mittels des Ventilelement nur teilweise oder vollständig verschließbar.

Gemäß der Erfindung weist die Verbrennungskraftmaschine eine Abgasrückführleitung auf, die an einer stromab des Turbinenrads, insbesondere stromab der Abgasnachbehandlungseinrichtung, angeordneten Abzweigstelle fluidisch mit dem Abgastrakt verbunden ist. Zudem ist die Abgasrückführleitung an einer Einleitstelle fluidisch mit dem Ansaugtrakt verbunden. Die Einleitstelle ist stromab des Verdichterrads angeordnet. Mittels der Abgasrückführleitung kann zumindest ein Teil des Abgases der Abzweigstelle aus dem Abgastrakt abgezweigt und in die Abgasrückführleitung eingeleitet werden. Das in die Abgasrückführleitung eingeleitet Abgas kann die Abgasrückführleitung durchströmen und wird mittels der Abgasrückführleitung zu der Einleitstelle geführt und an der Einleitstelle in den Ansaugtrakt eingeleitet, was insbesondere als Niederdruckabgasrückführung bezeichnet werden kann. Dadurch kann das Abgas in den Brennraum geführt werden. Ein bereits vor einem Beginn des Verbrennungsvorgangs im Brennraum vorhandener Anteil an Abgas kann einen Schadstoff besonders gering halten, der bei dem Verbrennungsvorgang gebildet werden kann. Dabei handelt kann es sich insbesondere um Stickstoffmonoxid oder Stickstoffdioxid, die beide allgemein insbesondere als Stickoxide bezeichnet werden. Im Heizbetrieb kann beispielsweise zumindest ein Teil des Heizmediums von der Abzweigstelle zu der Einleitstelle geführt werden und an der Einleitstelle in den Ansaugtrakt eingeleitet werden.

In einer weiteren Ausführungsform ist in der Abgasrückführleitung ein Abgasrückführventil angeordnet, mittels welchem eine die Abgasrückführleitung durchströmende Menge des Abgases und/oder des Heizmediums einstellbar ist. Hierfür kann das Abgasrückführventil mit der Regeleinrichtung verbunden und von der Regeleinrichtung ansteuerbar und dadurch betreibbar sein. Die Abgasrückführleitung ist beispielsweise mittels des Abgasrückführventils nur teilweise oder vollständig verschließbar.

Eine weitere Ausführungsform zeichnet sich dadurch aus, dass die Verbrennungskraftmaschine eine Rückführleitung aufweist, die an einer stromauf des Turbinenrads angeordneten dritten Verbindungsstelle fluidisch mit dem Abgastrakt und an einer vierten Verbindungsstelle fluidisch mit dem Ansaugtrakt verbunden ist. Die vierte Verbindungsstelle kann bevorzugt stromab des Verdichterrads angeordnet sein. Mittels der Rückführleitung kann beispielsweise zumindest ein Teil des den Abgastrakt durchströmenden Abgases aus dem Abgastrakt abgezweigt und in die Rückführleitung eingeleitet werden. Das in die Rückführleitung eingeleitete Abgas kann die Rückführleitung in eine erste Strömungsrichtung durchströmenden und wird dadurch mittels der Rückführleitung von der dritten Verbindungsstelle zu der vierten Verbindungsstelle geführt und an der vierten Verbindungsstelle in den Ansaugtrakt eingeleitet, was insbesondere als Hochdruckabgasrückführung bezeichnet werden kann. Im Heizbetrieb kann zumindest ein Teil des Heizmediums oder das gesamte Heizmedium an der vierten Verbindungsstelle aus dem Ansaugtrakt abgezweigt und in die Rückführleitung eingeleitet werden. Das in die Rückführleitung eingeleitete Abgas kann die Rückführleitung in eine der ersten Strömungsrichtung entgegengesetzte, zweiten Strömungsrichtung durchströmen und wird mittels der Rückführleitung von der vierten Verbindungsstelle zu der dritten Verbindungsstelle geführt. Dabei wird das Heizmedium vom Ansaugtrakt unter Umgehung des Brennraums bzw. aller Brennräume der Verbrennungskraftmaschine in den Abgastrakt zum Heizelement geführt, wodurch das Heizmedium und in der Folge die Abgasnachbehandlungseinrichtung besonders effektiv aufgeheizt werden können.

Bei einer weiteren Ausführungsform der Erfindung ist in der Rückführleitung ein Rückführventil angeordnet, mittels welchem eine die Rückführleitung durchströmende Menge des Abgases und/oder des Heizmediums einstellbar ist. Hierfür kann das Rückführventil mit der Regeleinrichtung verbunden und von der Regeleinrichtung ansteuerbar sein. Die Rückführleitung ist mittels des Rückführventils beispielsweise nur teilweise oder vollständig verschließbar.

Schließlich hat es sich als besonders vorteilhaft gezeigt, wenn das Heizelement wenigstens ein elektrisches Heizelement und/oder wenigstens einen Brenner und/oder wenigstens einen elektrischen Katalysator aufweist. Unter dem elektrischen Heizelement wird insbesondere ein Heizelement verstanden, dass elektrischen Strom in Wärme umwandelt. Als Brenner wird insbesondere ein Heizelement bezeichnet, in welchem wenigstens ein insbesondere flüssiger oder gasförmiger Brennstoff unter Bildung einer Flamme oder flammenlos und somit katalytisch verbrannt wird, insbesondere unter Freisetzung oder Abgabe von Wärme. Unter dem elektrischen Katalysator wird insbesondere ein Katalysator verstanden, der mittels eines elektrischen Heizelement aufgeheizt wird bzw. aufheizbar ist, wobei das elektrische Heizelement beispielsweise an einem Gehäuse des Katalysators befestigt und/oder mit einer katalytischen bzw. katalytisch wirksamen Struktur des Katalysators verbunden sein kann.

Ein zweiter Aspekt der Erfindung betrifft ein Kraftfahrzeug, welches eine erfindungsgemäße Verbrennungskraftmaschine gemäß dem ersten Aspekt der Erfindung aufweist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

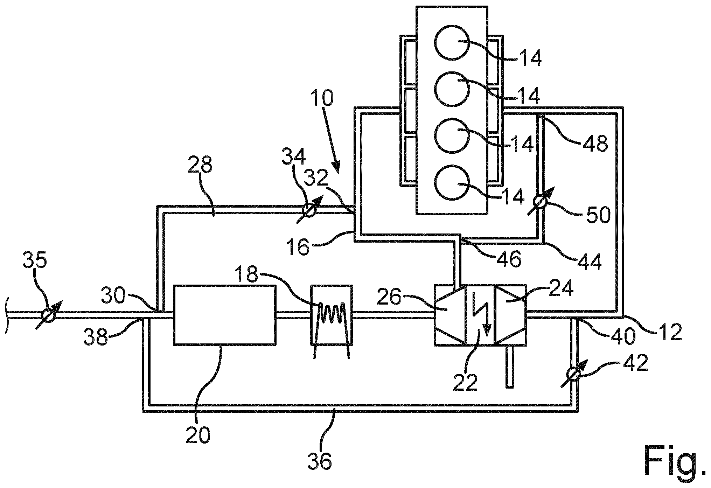

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Fig. eine schematische Darstellung einer erfindungsgemäßen Verbrennungskraftmaschine.

Die einzige Fig. zeigt schematisch eine Verbrennungskraftmaschine 10 für ein Kraftfahrzeug, insbesondere für einen vorzugsweise als Personenkraftwagen ausgebildeten Kraftwagen. Dabei ist das Kraftfahrzeug mittels der Verbrennungskraftmaschine 10 antreibbar. Die Verbrennungskraftmaschine 10 weist einen Ansaugtrakt 12, wenigstens einen Zylinder und einen Abgastrakt 16 auf. Der Zylinder begrenzt einen Brennraum 14 teilweise. Die Verbrennungskraftmaschine 10 weist einen Kolben auf, welcher translatorisch bewegbar in dem Zylinder aufgenommen ist. Der Kolben begrenzt den Brennraum 14 teilweise. In dem in der Fig. dargestellten Ausführungsbeispiel handelt es sich um einen Vierzylindermotor, der genau vier Brennräume 14 umfasst.

Der Einlasstrakt ist von einem Fluid in Form von Luft durchströmbar, welches mittels des Ansaugtrakts in den Brennraum 14 geführt wird. In dem Brennraum 14 laufen während eines befeuerten Betriebs der Verbrennungskraftmaschine 10 Verbrennungsvorgänge ab, aus denen ein Abgas der Verbrennungskraftmaschine 10 resultiert. Das Abgas kann den auch als Abgasanlage bezeichneten Abgastrakt 12 durchströmen und über den Abgastrakt 12 den Brennraum 14 verlassen. In dem Abgastrakt 16 sind wenigstens ein Heizelement 18 und eine Abgasnachbehandlungseinrichtung 20 angeordnet, wobei das Heizelement 18 stromauf der Abgasnachbehandlungseinrichtung 20 angeordnet ist. Die Abgasnachbehandlungseinrichtung 20 umfasst wenigstens ein Element zur Abgasreinigung. Das Element zur Abgasreinigung kann beispielsweise als ein Oxidationskatalysator, insbesondere ein Dieseloxidationskatalysator (DOC), als ein NOx-Speicherkatalysator (NSK), als ein SCR-Katalysator (Selective Catalytic Reduction Catalyst), als ein Dieselpartikelfilter (DPF) oder als ein SCR-Katalysator auf einem Dieselpartikelfilter (SDPF) ausgebildet sein.

Als Oxidationskatalysator wird insbesondere ein Katalysator bezeichnet, der Kohlenstoffmonoxid und unverbrannte Kohlenwasserstoffe aus dem Abgas mittels einer Oxidation mit einem Restsauerstoff entfernt. Als Restsauerstoff werden insbesondere Sauerstoffmoleküle bezeichnet, die bei den Verbrennungsvorgängen kein Teil einer chemischen Reaktion gewesen sind und somit für weitere chemische Reaktionen als Sauerstoff zur Verfügung stehen. Unter dem NOx-Speicherkatalysator (NSK) wird insbesondere ein Katalysator verstanden, der eine Speicherkomponente aufweist, in der Stickoxide chemisch gebunden und somit aus dem Abgas entfernt werden. Anschließend können in einem Betriebszustand der Verbrennungskraftmaschine, der einen Sauerstoffmangel im Abgas aufweist, die Stickoxide aus der Speicherkomponente wieder freigegeben werden und mit reduzierenden Komponenten, wie unverbrannte Kohlenwasserstoffe oder Kohlenstoffmonoxid, reduziert werden. Als SCR-Katalysator wird insbesondere ein Katalysator bezeichnet, in dem Stickoxide mit Harnstoff aus einer eingebrachten Harnstofflösung zu Stickstoff und Wasser in einer Redoxreaktion umgesetzt werden. Unter einem Dieselpartikelfilter (DPF) wird insbesondere ein Filter verstanden, der Partikel, die auch als Ruß oder Feinstaub bezeichnet werden, aus dem Abgas entfernt.

Die Verbrennungskraftmaschine 10 weist ebenfalls einen elektrischen, elektrisch unterstützten bzw. elektrisch unterstützbaren Abgasturbolader 22 auf, der ein im Ansaugtrakt 12 angeordnetes Verdichterrad als erstes Laufrad 24, ein im Abgastrakt 16 angeordnetes Turbinenrad als zweites Laufrad 26 und eine Welle umfasst. Das erste Laufrad 24 und das zweite Laufrad 26 sind auf der Welle angeordnet und drehfest mit der Welle verbunden. Das erste Laufrad 24, das zweite Laufrad 26 und die Welle sind beispielsweise separat voneinander ausgebildete Komponenten, die derart miteinander verbunden sind, sodass Relativdrehungen zwischen den Komponenten sowie in axialer Richtung und in radialer Richtung der Welle relativ zueinander erfolgende Bewegungen unterbleiben oder vermieden werden. Das erste Laufrad 24 wird beispielsweise dazu genutzt, die dem Brennraum 14 über den Ansaugtrakt 12 zuzuführende Luft zu verdichten. Mittels des zweiten Laufrads 26 wird beispielsweise das aus dem Brennraum 14 in den Abgastrakt 16 strömende Abgas expandiert, wodurch das zweite Laufrad 26 vom Abgas angetrieben wird. Des Weiteren weist die Verbrennungskraftmaschine 10 eine elektrische Maschine auf, mit welcher der Abgasturbolader 22 unter Nutzung von elektrischer Energie angetrieben werden kann. Die elektrische Maschine kann derart ausgebildet sein, dass sie die Welle des Abgasturbolader 22 antreibt, sodass das erste Laufrad 24 und das zweite Laufrad 26 mittels der Welle angetrieben werden. Alternativ kann die elektrische Maschine derart ausgebildet sein, dass das erste Laufrad 24 und/oder das zweite Laufrad 26 direkt von der elektrischen Maschine antreibbar sind. Darunter ist zu verstehen, dass die Welle nicht unmittelbar von der elektrischen Maschine angetrieben wird. Die Verbrennungskraftmaschine 10 weist auch eine beispielsweise als Kurbelwelle ausgebildete Abtriebswelle auf, über welche die Verbrennungskraftmaschine Drehmomente zum Antreiben des Kraftfahrzeugs bereitstellen kann, insbesondere in dem befeuerten Betrieb der Verbrennungskraftmaschine 10. In einem Heizbetrieb der Verbrennungskraftmaschine 10 wird Luft als Heizmedium mittels des elektrisch unterstütztem Abgasturboladers 22 in den Abgastrakt 16 gefördert, indem wenigstens eines der beiden Laufräder 24, 26 mittels der elektrischen Maschine elektrisch angetrieben wird. Während des Heizbetriebs unterbleiben Verbrennungsvorgänge in den bzw. allen Brennräumen 14 der Verbrennungskraftmaschine, und während des Heizbetriebs steht die Abtriebswelle still. Außerdem wird in dem Heizbetrieb das Heizmedium mittels des Heizelements 18 erwärmt, sodass mittels des erwärmten Heizmediums in dem Heizbetrieb die Abgasnachbehandlungseinrichtung 20 erwärmt bzw. aufgeheizt wird.

Um nun die die Abgasnachbehandlungseinrichtung 20 besonders vorteilhaft und besonders schnell aufheizen zu können, weist die Verbrennungskraftmaschine 10 einen Ventiltrieb auf, welcher wenigstens ein dem Brennraum 14 zugeordnetes Einlassventil und wenigstens ein dem Brennraum 14 zugeordnetes Auslassventil aufweist. In dem Heizbetrieb sind das Einlassventil und das Auslassventil gleichzeitig geöffnet, wodurch in dem Heizbetrieb das Heizmedium von dem Ansaugtrakt 12 durch den Brennraum hindurch in den Abgastrakt 16 führbar ist. Eine entsprechende Förderung des Heizmediums von dem Ansaugtrakt 12, durch den Brennraum hindurch, in den Abgastrakt 16 erfolgt mittels des elektrisch angetriebenen Abgasturboladers 22, wobei wenigstens eines der beiden Laufräder 24,26 elektrisch angetrieben wird. Die Verbrennungskraftmaschine 10 weist zudem wenigstens ein Leitungselement 28 auf, welches an einer stromab der Abgasnachbehandlungseinrichtung 20 angeordneten ersten Verbindungsstelle 30 und an einer stromauf des Heizelements 18, insbesondere stromauf des Turbinenrads 26, angeordneten zweiten Verbindungsstelle 32 fluidisch mit dem Abgastrakt 16 verbunden ist. Mittels des Leitungselements 28 ist zumindest ein Teil des den Abgastrakts 16 durchströmenden Heizmediums an der ersten Verbindungsstelle 30 aus dem Abgastrakt 16 abzweigbar und von der ersten Verbindungsstelle 30 zu der zweiten Verbindungsstelle 32 rückführbar und an der zweiten Verbindungsstelle 32 in den Abgastrakt 16 einleitbar Hierdurch ist eine Rückführung des Heizmediums darstellbar, da das Heizmedium mittels des Leitungselements 28 von der ersten Verbindungsstelle 30 zu der demgegenüber stromauf angeordneten, zweiten Verbindungsstelle 32 rückgeführt wird und in den Abgastrakt 16 eingeleitet wird. Durch diese Rückführung des Heizmediums entsteht ein erster Rezirkulationskreislauf, in dem oder über den das Heizmedium zwischen den Verbindungsstellen 30, 32 zirkulieren kann. Der erste Rezirkulationskreislauf kann mittels des elektrisch angetriebenen Abgasturboladers 22 insbesondere in einem als stehenden Motor bezeichneten Zustand betrieben werden. Dadurch kann die Abgasnachbehandlungseinrichtung 20 bereits bei stehendem Motor aufgeheizt und somit besonders vorteilhaft konditioniert werden. Deswegen weist die Verbrennungskraftmaschine 10 einen besonders geringen Ausstoß von Schadstoffen auf. Unter dem stehen Motor ist zu verstehen, dass in der Verbrennungskraftmaschine 10 keine Verbrennungsvorgänge ablaufen und die Abtriebswelle stillsteht.

In dem Leitungselement 28 ist ein Ventilelement 34 angeordnet, mittels welchem eine das Leitungselement 28 durchströmende Menge des Heizmediums einstellbar ist. Hierfür kann das Ventilelement 28 mit einer Regeleinrichtung verbunden sein, die beispielsweise von einem Steuergerät dargestellt wird.

Mittels eines im Abgastrakt 16 stromab der ersten Verbindungsstelle 30 angeordneten Abgas-Ventilelements 35, welches beispielsweise als eine Abgasklappe ausgebildet ist, kann ein die Verbrennungskraftmaschine 10 verlassender Massenstrom des Abgases und/oder Heizmedium vermindert oder unterbunden oder aufgestaut werden. Zur Einstellung eines definierten Massenstroms kann das Abgas-Ventilelement 35 mit einer Regeleinrichtung verbunden sein, die beispielsweise ein Steuergerät ist und das Abgas-Ventilelement 35 ansteuern und dadurch betreiben, insbesondere steuern oder regeln kann. Durch eine zumindest teilweise Verschließung des Abgastrakts 16 mittels des Abgas-Ventilelements 35 kann bewirkt werden, dass eine besonders große Menge des Heizmediums den Rezirkulationskreislauf durchströmt, das heißt über den oder entlang des Rezirkulationskreislaufs zirkuliert. Dabei umfasst der Rezirkulationskreislauf das Leitungselement 28, sodass das den Rezirkulationskreislauf durchströmende Heizmedium das Leitungselement 28 durchströmt und somit über das Leitungselement 28 zirkuliert. Durch dieses Zirkulieren oder Rezirkulieren kann die Abgasnachbehandlungseinrichtung 20 besonders schnell und effektiv aufgeheizt werden.

Die Verbrennungskraftmaschine 10 weist eine Abgasrückführleitung 36 auf. Die Abgasrückführleitung 36 ist an einer stromab der Abgasnachbehandlungseinrichtung 20 angeordneten Abzweigstelle 38 fluidisch mit dem Abgastrakt 16 verbunden. Des Weiteren ist die Abgasrückführleitung 36 an einer Einleitstelle 40 fluidisch mit dem Ansaugtrakt 12 verbunden. Mittels der Abgasrückführleitung 36 kann, insbesondere während des befeuerten Betriebs, zumindest ein Teil des den Abgastrakt 16 durchströmenden Abgases von der Abzweigstelle 38 zu der Einleitstelle 40 geführt werden und an der Einleitstelle 40 in den Ansaugtrakt 12 eingeleitet werden. Die Einleitstelle ist im Ansaugtrakt stromab des ersten Laufrads 24 angeordnet, kann aber alternativ stromauf des ersten Laufrads 24 angeordnet sein, was in der Fig. nicht dargestellt ist. Im Heizbetrieb kann zumindest ein Teil des Heizmediums von der Abzweigstelle 38 zu der Einleitstelle 40 geführt werden und an der Einleitstelle 40 in den Ansaugtrakt 12 eingeleitet werden. Somit kann im Heizbetrieb über die Abgasrückführleitung 36 ein zweiter Rezirkulationskreislauf des Heizmediums dargestellt werden. Die Förderung des Heizmediums erfolgt durch das elektrisch angetriebene erste Laufrad 24 und/oder das elektrisch angetriebene zweite Laufrad 26 des Abgasturboladers 22. Der zweite Rezirkulationskreislauf kann unabhängig vom ersten Rezirkulationskreislauf oder zusammen mit dem ersten Rezirkulationskreislauf betrieben werden. In der Abgasrückführleitung 36 ist ein Abgasrückführventil 42 angeordnet, mittels welchem eine die Abgasrückführleitung 36 durchströmbare Menge des Abgases und/oder des Heizmediums einstellbar ist. Hierfür kann das Abgasrückführventil 42 mit einer Regeleinrichtung verbunden sein, die beispielsweise vom Steuergerät dargestellt wird.

Die Verbrennungskraftmaschine 10 weist eine Rückführleitung 44 auf, die an einer stromauf des zweiten Laufrads 26 angeordneten dritten Verbindungsstelle 46 fluidisch mit dem Abgastrakt und an einer vierten Verbindungsstelle 48 fluidisch mit dem Ansaugtrakt 12 verbunden ist. Die vierte Verbindungsstelle 48 kann bevorzugt stromab des ersten Laufrads 24 angeordnet sein. Mittels der Rückführleitung 44 ist zumindest ein Teil des Abgases in einer ersten Strömungsrichtung von der dritten Verbindungsstelle 46 zu der vierten Verbindungsstelle 48 führbar und an der vierten Verbindungsstelle 48 in den Ansaugtrakt 12 einleitbar. Im Heizbetrieb ist das Heizmedium in einer zweiten Strömungsrichtung, entgegen der ersten Strömungsrichtung, von der vierten Verbindungsstelle 48 zu der dritten Verbindungsstelle 46 führbar und an der dritten Verbindungsstelle 46 in den Abgastrakt 16 einleitbar. Dabei wird das Heizmedium mittels wenigstens dem elektrisch angetriebenen ersten Laufrad 24 vom Ansaugtrakt unter Umgehung des Brennraums 14 zum Heizelement 18 gefördert. In der Rückführleitung 44 ist ein Rückführventil 50 angeordnet sein, mittels welchem eine die Rückführleitung 44 durchströmbare Menge des Abgases oder des Heizmediums einstellbar ist. Hierfür kann das Rückführventil 50 mit einer Regeleinrichtung verbunden sein, die beispielsweise vom Steuergerät dargestellt wird.

Das Heizelement 18 kann ein elektrisches Heizelement und/oder einen Brenner und/oder einen elektrisch beheizbaren Katalysator aufweisen.

### Bezugszeichenliste

- 10: Verbrennungskraftmaschine
- 12: Ansaugtrakt
- 14: Brennraum
- 16: Abgastrakt
- 18: Heizelement
- 20: Abgasnachbehandlungseinrichtung
- 22: Abgasturbolader
- 24: Verdichterrad
- 26: Turbinenrad
- 28: Leitungselement
- 30: erste Verbindungsstelle
- 32: zweite Verbindungsstelle
- 34: Ventilelement
- 35: Abgas-Ventilelement
- 36: Abgasrückführleitung
- 38: Entnahmestelle
- 40: Einleitstelle
- 42: Abgasrückführventil
- 44: Rückführleitung
- 46: dritte Verbindungsstelle
- 48: vierte Verbindungsstelle
- 50: Rückführventil

## Patentansprüche

1. Verbrennungskraftmaschine (10) für ein Kraftfahrzeug, mit einer Abtriebswelle, über welche das Kraftfahrzeug mittels der Verbrennungskraftmaschine (10) antreibbar ist, mit einem von wenigstens einem Brennraum (14) der Verbrennungskraftmaschine (10) zuzuführender Luft durchströmbaren Ansaugtrakt (12), mit einem von Abgas aus dem Brennraum (14) durchströmbaren Abgastrakt (16), mit einer in dem Abgastrakt angeordneten Abgasnachbehandlungseinrichtung (20) zum Nachbehandeln des Abgases, mit wenigstens einem in dem Abgastrakt (16) stromauf der Abgasnachbehandlungseinrichtung (20) angeordneten Heizelement (18) zum Erhitzen eines den Abgastrakt (16) durchströmenden Gases, und mit einem elektrisch unterstützten Abgasturbolader (22), welcher ein in dem Ansaugtrakt (12) angeordnetes Verdichterrad als erstes Laufrad (24) zum Verdichten der den Ansaugtrakt (12) durchströmenden Luft und ein in dem Abgastrakt (16) angeordnetes und von dem Abgas antreibbares Turbinenrad als zweites Laufrad (26) und eine elektrische Maschine aufweist, mittels welcher in einem Heizbetrieb zum Aufheizen der Abgasnachbehandlungseinrichtung (20) zumindest eines der Laufräder (24, 26) antreibbar ist, wodurch in dem Heizbetrieb, während welchem Verbrennungsvorgänge in dem Brennraum (14) unterbleiben und die Abtriebswelle stillsteht, mittels des zumindest einen Laufrads (24, 26) in den Abgastrakt (16) Luft als Heizmedium zu fördern ist, welches in dem Heizbetrieb zum Aufheizen der Abgasnachbehandlungseinrichtung (20) mittels des Heizelements (18) erwärmbar ist, wobei eine Abgasrückführleitung (36) vorgesehen ist, welche an einer stromab des Turbinenrads (26) angeordneten Abzweigstelle (38) fluidisch mit dem Abgastrakt (16) und an einer Einleitstelle (40) fluidisch mit dem Ansaugtrakt (12) verbunden ist, wodurch zumindest ein Teil des Abgases und/oder in dem Heizbetrieb zumindest ein Teil des Heizmediums von der Abzweigstelle (38) zu der Einleitstelle (40) führbar und an der Einleitstelle (40) in den Ansaugtrakt (12) einleitbar ist
**gekennzeichnet durch**
wenigstens ein Leitungselement (28), welches an einer stromab der Abgasnachbehandlungseinrichtung (20) angeordneten ersten Verbindungsstelle (30) und an einer stromauf des Heizelements (18) angeordneten zweiten Verbindungsstelle (32) fluidisch mit dem Abgastrakt (16) verbunden ist, wodurch zumindest ein Teil des Heizmediums von der ersten Verbindungsstelle (30) zu der zweiten Verbindungsstelle (32) rückführbar und an der zweiten Verbindungsstelle (32) in den Abgastrakt (16) einleitbar ist, wobei die Verbrennungskraftmaschine (10) einen Ventiltrieb aufweist, welcher wenigstens ein dem Brennraum (14) zugeordnetes Einlassventil und wenigstens ein dem Brennraum (14) zugeordnetes Auslassventil aufweist, und wobei in dem Heizbetrieb das Einlassventil und das Auslassventil gleichzeitig geöffnet sind, wodurch in dem Heizbetrieb das Heizmedium von dem Ansaugtrakt (12) durch den Brennraum (14) hindurch in den Abgastrakt (16) führbar ist, und wobei die Einleitstelle (40) der Abgasrückführleitung (36) stromab des Verdichterrads (24) angeordnet ist.

2. Verbrennungskraftmaschine (10) nach Anspruch 1,
**gekennzeichnet durch**
ein in dem Leitungselement (28) angeordnetes Ventilelement (34), mittels welchem eine das Leitungselement (28) durchströmbare Menge des Heizmediums einstellbar ist.

3. Verbrennungskraftmaschine (10) nach Anspruch 1 oder 2,
**gekennzeichnet durch**
ein in der Abgasrückführleitung (36) angeordnetes Abgasrückführventil (42), mittels welchem eine die Abgasrückführleitung (36) durchströmbare Menge des Abgas und/oder des Heizmediums einstellbar ist.

4. Verbrennungskraftmaschine (10) nach einem der vorhergehenden Ansprüche,
**gekennzeichnet durch**
eine Rückführleitung (44), welche an einer stromauf des Turbinenrads (26) angeordneten dritten Verbindungsstelle (46) fluidisch mit dem Abgastrakt (16) und an einer vierten Verbindungsstelle (48) fluidisch mit dem Ansaugtrakt (12) verbunden ist, wodurch zumindest ein Teil des Abgases von der dritten Verbindungsstelle (46) zu der vierten Verbindungsstelle (48) führbar und an der vierten Verbindungsstellestelle (48) in den Ansaugtrakt (12) einleitbar ist und/oder in dem Heizbetrieb zumindest ein Teil des Heizmediums von der vierten Verbindungsstelle (48) zu der dritten Verbindungsstelle (46) führbar und an der dritten Verbindungsstellestelle (46) in den Abgastrakt (16) einleitbar ist.

5. Verbrennungskraftmaschine (10) nach Anspruch 4,
**dadurch gekennzeichnet, dass**
die vierte Verbindungsstelle (48) stromab des Verdichterrads (22) angeordnet ist.

6. Verbrennungskraftmaschine (10) nach Anspruch 4 oder 5,
**gekennzeichnet durch**
ein in der Rückführleitung (46) angeordnetes Rückführventil (50), mittels welchem eine die Rückführleitung (44) durchströmbare Menge des Abgas und/oder des Heizmediums einstellbar ist.

7. Verbrennungskraftmaschine (10) nach einem der vorhergehenden Ansprüche, **dadurch gekennzeichnet, dass**
das Heizelement (18) wenigstens ein elektrisches Heizelement und/oder einen Brenner aufweist.

8. Kraftfahrzeug, mit einer Verbrennungskraftmaschine (10) nach einem der vorhergehenden Ansprüche.

## Claims

1. Internal combustion engine (10) for a motor vehicle, comprising an output shaft via which the motor vehicle can be driven by means of the internal combustion engine (10), comprising an intake tract (12) through which air to be supplied to at least one combustion chamber (14) of the internal combustion engine (10) can flow, comprising an exhaust tract (16) through which exhaust gas from the combustion chamber (14) can flow, comprising an exhaust aftertreatment device (20) arranged in the exhaust tract for aftertreatment of the exhaust gas, comprising at least one heating element (18) arranged in the exhaust tract (16) upstream of the exhaust aftertreatment device (20) for heating a gas flowing through the exhaust tract (16), and comprising an electrically assisted exhaust gas turbocharger (22), which has a compressor wheel arranged in the intake tract (12) as a first impeller (24) for compressing the air flowing through the intake tract (12) and a turbine wheel which is arranged in the exhaust tract (16) and can be driven by the exhaust gas as a second impeller (26), and an electric machine by means of which at least one of the impellers (24, 26) can be driven in a heating mode for heating up the exhaust gas aftertreatment device (20), whereby in the heating mode, during which combustion processes in the combustion chamber (14) are stopped and the output shaft is stationary, air can be conveyed into the exhaust tract (16) as a heating medium by means of the at least one impeller (24, 26), which air can be heated by means of the heating element (18) in the heating mode for heating up the exhaust gas aftertreatment device (20), wherein an exhaust gas recirculation line (36) is provided which is fluidically connected to the exhaust tract (16) at a branch point (38) arranged downstream of the turbine wheel (26) and is fluidically connected to the intake tract (12) at an inlet point (40), whereby at least part of the exhaust gas and/or in the heating mode at least part of the heating medium can be conveyed from the branch point (38) to the inlet point (40) and can be introduced into the intake tract (12) at the inlet point (40) **characterized by** at least one line element (28) which is fluidically connected to the exhaust tract (16) at a first connection point (30) arranged downstream of the exhaust gas aftertreatment device (20) and at a second connection point (32) arranged upstream of the heating element (18), whereby at least part of the heating medium can be returned from the first connection point (30) to the second connection point (32) and introduced into the exhaust tract (16) at the second connection point (32), wherein the internal combustion engine (10) has a valve train which has at least one inlet valve assigned to the combustion chamber (14) and at least one outlet valve assigned to the combustion chamber (14), and wherein in the heating mode the inlet valve and the outlet valve are opened simultaneously, whereby in the heating mode the heating medium can be conveyed from the intake tract (12) through the combustion chamber (14) into the exhaust tract (16), and wherein the inlet point (40) of the exhaust gas recirculation line (36) is arranged downstream of the compressor wheel (24).

2. Internal combustion engine (10) according to claim 1, **characterized by** a valve element (34) arranged in the line element (28), by means of which a quantity of the heating medium that can flow through the line element (28) can be adjusted.

3. Internal combustion engine (10) according to claim 1 or 2, **characterized by** an exhaust gas recirculation valve (42) arranged in the exhaust gas recirculation line (36), by means of which a quantity of the exhaust gas and/or the heating medium that can flow through the exhaust gas recirculation line (36) can be adjusted.

4. Internal combustion engine (10) according to any one of the preceding claims, **characterized by** a return line (44) which is fluidically connected to the exhaust tract (16) at a third connection point (46) arranged upstream of the turbine wheel (26) and is fluidically connected to the intake tract (12) at a fourth connection point (48), whereby at least part of the exhaust gas can be conveyed from the third connection point (46) to the fourth connection point (48) and introduced into the intake tract (12) at the fourth connection point (48) and/or in the heating mode at least part of the heating medium can be conveyed from the fourth connection point (48) to the third connection point (46) and introduced into the exhaust tract (16) at the third connection point (46).

5. Internal combustion engine (10) according to claim 4,
**characterized in that** the fourth connection point (48) is arranged downstream of the compressor wheel (22).

6. Internal combustion engine (10) according to claim 4 or 5,
**characterized by** a return valve (50) arranged in the return line (46), by means of which a quantity of the exhaust gas and/or the heating medium that can flow through the return line (44) can be adjusted.

7. Internal combustion engine (10) according to any one of the preceding claims, **characterized in that** the heating element (18) has at least one electric heating element and/or a burner.

8. Motor vehicle comprising an internal combustion engine (10) according to any one of the preceding claims.

## Revendications

1. Moteur à combustion interne (10) pour un véhicule automobile, comportant un arbre de sortie, par l'intermédiaire duquel le véhicule automobile peut être entraîné au moyen du moteur à combustion interne (10), comportant un conduit d'admission (12) pouvant être traversé par de l'air à amener dans au moins une chambre de combustion (14) du moteur à combustion interne (10), comportant un conduit de gaz d'échappement (16) pouvant être traversé par des gaz d'échappement provenant de la chambre de combustion (14), comportant un dispositif de post-traitement des gaz d'échappement (20) disposé dans le conduit de gaz d'échappement pour le post-traitement des gaz d'échappement, comportant au moins un élément chauffant (18) disposé dans le conduit de gaz d'échappement (16) en amont du dispositif de post-traitement des gaz d'échappement (20) et permettant de chauffer un gaz traversant le conduit de gaz d'échappement (16), et comportant un turbocompresseur à gaz d'échappement (22) assisté électriquement qui présente une roue de compresseur disposée dans le conduit d'admission (12) en tant que première roue mobile (24) pour la compression de l'air traversant le conduit d'admission (12) et une roue de turbine disposée dans le conduit de gaz d'échappement (16) et pouvant être entraînée par les gaz d'échappement en tant que seconde roue mobile (26) et une machine électrique au moyen de laquelle, dans un mode de chauffage pour le chauffage du dispositif de post-traitement des gaz d'échappement (20), au moins l'une des roues mobiles (24, 26) peut être entraînée, moyennant quoi, dans le mode de chauffage, pendant lequel des processus de combustion ne se produisent pas dans la chambre de combustion (14) et l'arbre de sortie est à l'arrêt, de l'air peut être acheminé dans le conduit de gaz d'échappement (16) en tant que milieu de chauffage au moyen de l'au moins une roue mobile (24, 26), lequel milieu de chauffage peut être chauffé dans le mode de chauffage pour chauffer le dispositif de post-traitement des gaz d'échappement (20) au moyen de l'élément chauffant (18), dans lequel une conduite de recyclage des gaz d'échappement (36) est prévue, laquelle est reliée de manière fluidique au conduit de gaz d'échappement (16) à un point de dérivation (38) disposé en aval de la roue de turbine (26) et est reliée de manière fluidique au conduit d'admission (12) à un point d'introduction (40), moyennant quoi au moins une partie des gaz d'échappement et/ou, dans le mode de chauffage, au moins une partie du milieu de chauffage peuvent être guidées depuis le point de dérivation (38) jusqu'au point d'introduction (40) et être introduites dans le conduit d'admission (12) au niveau du point d'introduction (40)**caractérisé par** au moins un élément formant conduite (28) qui est relié de manière fluidique au conduit de gaz d'échappement (16) à un premier point de liaison (30) disposé en aval du dispositif de post-traitement des gaz d'échappement (20) et à un deuxième point de liaison (32) disposé en amont de l'élément chauffant (18), moyennant quoi au moins une partie du milieu de chauffage peut être recyclée depuis le premier point de liaison (30) jusqu'au deuxième point de liaison (32) et être introduite dans le conduit de gaz d'échappement (16) au niveau du deuxième point de liaison (32), dans lequel le moteur à combustion interne (10) présente une commande de soupapes qui présente au moins une soupape d'entrée associée à la chambre de combustion (14) et au moins une soupape de sortie associée à la chambre de combustion (14), et dans lequel, dans le mode de chauffage, la soupape d'entrée et la soupape de sortie sont ouvertes simultanément, moyennant quoi, dans le mode de chauffage, le milieu de chauffage peut être guidé depuis le conduit d'admission (12) à travers la chambre de combustion (14) et dans le conduit de gaz d'échappement (16), et dans lequel le point d'introduction (40) de la conduite de recyclage des gaz d'échappement (36) est disposé en aval de la roue de compresseur (24).

2. Moteur à combustion interne (10) selon la revendication 1, **caractérisé par** un élément formant soupape (34) disposé dans l'élément formant conduite (28), au moyen duquel élément formant soupape une quantité du milieu de chauffage pouvant traverser l'élément formant conduite (28) peut être réglée.

3. Moteur à combustion interne (10) selon la revendication 1 ou 2, **caractérisé par** une soupape de recyclage des gaz d'échappement (42) disposée dans la conduite de recyclage des gaz d'échappement (36) et au moyen de laquelle une quantité des gaz d'échappement et/ou du milieu de chauffage pouvant traverser la conduite de recyclage des gaz d'échappement (36) peut être réglée.

4. Moteur à combustion interne (10) selon l'une des revendications précédentes, **caractérisé par** une conduite de recyclage (44) qui est reliée de manière fluidique au conduit de gaz d'échappement (16) à un troisième point de liaison (46) disposé en amont de la roue de turbine (26) et est reliée fluidiquement au conduit d'aspiration (12) à un quatrième point de liaison (48), moyennant quoi au moins une partie des gaz d'échappement peut être guidée depuis le troisième point de liaison (46) jusqu'au quatrième point de liaison (48) et être introduite dans le conduit d'aspiration (12) au niveau du quatrième point de liaison (48) et/ou, dans le mode de chauffage, au moins une partie du milieu de chauffage peut être guidée depuis le quatrième point de liaison (48) jusqu'au troisième point de liaison (46) et être introduite dans le conduit de gaz d'échappement (16) au niveau du troisième point de liaison (46).

5. Moteur à combustion interne (10) selon la revendication 4,
**caractérisé en ce que** le quatrième point de liaison (48) est situé en aval de la roue de compresseur (22).

6. Moteur à combustion interne (10) selon la revendication 4 ou 5, **caractérisé par** une soupape de recyclage (50) disposée dans la conduite de recyclage (46), au moyen de laquelle soupape de recyclage une quantité de gaz d'échappement et/ou du milieu de chauffage pouvant traverser la conduite de recyclage (44) peut être réglée.

7. Moteur à combustion interne (10) selon l'une des revendications précédentes, **caractérisé en ce que** l'élément chauffant (18) présente au moins un élément chauffant électrique et/ou un brûleur.

8. Véhicule automobile, comportant un moteur à combustion interne (10) selon l'une des revendications précédentes.
